# EUROPEAN PATENT SPECIFICATION

(11) **EP 0 872 930 B1**
(45) Date of publication and mention of the grant of the patent: **03.07.2002**
(21) Application number: 98201165.2
(22) Date of filing: 16.04.1998
(51) Int. Cl.: H02B 1/00

(54) **Frame with supporting and connection device for profiled elements and panels of cabinets**
Rahmen mit Vorrichtung zur Unterstützung und Verbindung von Profilelementen und Gehausewänden
Cadre avec dispositif de support et de connexion pour éléments profilés et panneaux d'armoires

(30) Priority: 18.04.1997 IT MI970922
(43) Date of publication of application: 21.10.1998
(73) Proprietor: ABB Sace SpA, 20137 Milano (IT)
(72) Inventor: Fontana, Rodolfo, 21050 Clivio (VA) (IT)
(74) Representative: Giavarini, Francesco

(56) References cited:
- EP-A- 0 533 555
- EP-A- 0 538 540
- CH-A- 673 552
- DE-B- 1 271 803

## Description

The present invention relates to a frame provided with connecting and supporting devices for profiled elements and panels of cabinets, such as for example electrical panels, having mutual assembly and fixing means.

Conventional frames have devices for connecting cabinet parts such as for example outer cladding panels, doors or frames of other cabinets.

For example, the profiled elements constituting the uprights of the frame have, on more than one side, devices for connecting contiguous cladding panels. Each one of the conventional devices connects a single cladding panel in a single point to the frame. Accordingly, for each side of the frame of the cabinet a large number of connecting and supporting devices are provided.

The large number of devices present on the frame makes it difficult to provide said frame and to assemble the different parts that constitute the cabinet.

Connecting and supporting devices currently have a complex shape which allows to equally connect cladding panels or doors. Conventional devices in fact connect the cladding panels so as to avoid their mutual interference and support the doors so that they can oscillate freely about one side of the frame.

In order to obtain these complex shapes, connecting and supporting devices are currently produced as die-cast parts which have connecting and supporting'heads supported at the ends of folded arms. The die-cast parts are particularly troublesome to manufacture and are sometimes heavy.

Devices are also known having shapes that can be geometrically coupled together in order to mutually connect a plurality of frames. These geometrically mating devices generally have shapes which are even more complicated and demanding to produce.

The cross-section of the profiled elements, whereto conventional connecting and supporting devices are fixed, has also a complex profile. The profile must in fact provide for individual surfaces, for the fixing of the devices, which are appropriately orientated and arms or shoulders which are laterally adjacent to the devices in order to support the sealing means to be interposed between the panels and the frame.

An example of frames of the prior art is described in European Patent Application nr. 0533555, which discloses a profiled element for frames of electrical switchboards; the profiled element has a wall provided with connecting devices which are fixed to an external surface of the profiled frame and are suitable for receiving equipment components of the switchboards.

The aim of the present invention is to obviate the drawbacks of the prior art and allow the connection and support of the components that constitute cabinets in a simple and modular manner which allows easy assembly.

This aim is achieved by a frame with a connecting and supporting device for profiled elements and panels of cabinets, provided with means for mutual positioning and fixing, the profiled element that constitutes the frame having a connecting surface between two arms divaricating towards the outside, the connecting and supporting device comprising a base plate suitable to be accomodated on said connecting surface, and wings which protrude form the sides of said base plate and have, at their free ends, a plurality of connecting slots, the plurality of slots of one wing being provided in an offset position with respect to the plurality of slots of the other wing. The frame of the present invention is characterized in that the connecting and supporting device is composed of a single folded sheet of metal and in that, when the base plate is accomodated on the connecting surface the wings rest on the sides of the arms.

Thanks to the fact that the wings of the connecting and supporting device rest on the sides of the arms of the profiled element, the torsional rigidity of the profiled element is increased.

In order to be able to connect two devices side by side so as to limit longitudinal bulk, the plurality of slots is arranged so that it is longitudinally offset with respect to the centerline of the connecting and supporting device by half the height of the eye that constitutes the slot.

In order to provide resting surfaces for the doors or the cladding panels, the end part of the wings is folded at right angles to the arms of the profiled element.

In order to allow to easily interpose gaskets between the cladding panels and between the doors and the profiled elements, the wings of the connecting and supporting device are longer than the arms of the profiled element.

In order to allow the wings of the hinges that are fixed to the doors to have a sufficiently wide abutment surface, the end parts of the wings have different lengths.

In order to connect the cladding panels and the connecting and supporting devices of contiguous frames by means of screws or rivets, the end part of the wings of the connecting and supporting device has transverse through holes which are mutually aligned longitudinally.

In order to allow the connection of two mutually facing and reversed devices, the holes provided on the end part of the wings are mutually opposite and equally spaced from the centerline of the connecting and supporting device, a first hole has an internal thread, and a second hole has a larger diameter than the first hole.

In order to constitute the frame of a cabinet having right-angled edges by means of the profiled elements, the arms of the profiled element are arranged mutually at right angles.

In order to give strength to the frame, the outer sides of the arms of the profiled elements are joined by seaming, constituting a closed profile. The closed profiled element allows to reduce the thickness of the metal plate that constitutes the profiled element and therefore the weight of the profiled element while maintaining the same mechanical strength.

In order to give symmetry to the profile, the surface for fixing the connecting and supporting device of said profiled element is inclined at 45° with respect to the arms.

In order to assemble the profiled elements that constitute the uprights with the profiled elements that constitute the cross-members, the profiled elements are mutually connected at their ends by means of an angle element. The body of the angle element has abutment surfaces for the profiled elements, wherefrom mutually perpendicular arms extend; the arms have a cross-section which can be geometrically coupled to the inside walls of the profiled element.

The main advantages of the invention 'lie in the fact that the frame is provided with a connecting and supporting device for profiled elements, cladding panels and doors and in that the device is formed monolithically in order to interlock the contiguous sides of the frame.

The connecting and supporting device can be produced easily and quickly since it is formed by a single cut and folded metal sheet.

The frame provided with the connecting and supporting device is particularly lightweight.

The profiled element and the connecting and supporting device fixed thereto constitute a single module for all the parts (uprights and cross-members) of the frame.

In order to assemble a cabinet frame having the chosen dimensions it is sufficient to cut a segment of profiled element of appropriate length for the uprights and the cross-members and to assemble the segments by means of the angle elements.

Another advantage resides in the fact that the connecting and supporting device allows to connect cladding panels as well as doors by having hinge connection means and means for connection to screws, bolts or rivets.

The device, accommodated in the concave part of the profiled element, constitutes a reinforcement improving the structural strength performance of said profiled element.

Further characteristics and advantages of the device according to the present invention will become apparent from the following detailed description of embodiments thereof, illustrated merely by way of non-limitative example in the accompanying drawings, wherein:
Figure 1 is an exploded perspective view of the frame of an electrical cabinet according to the present invention;
Figure 2 is a plan view of the profile used for the frame according to a first embodiment of the present invention;
Figure 3 is a side view of an angle element for connecting a plurality of profiled elements in a frame;
Figure 4 is a perspective view of a connecting and supporting device fixed to a profiled element according to a second embodiment of the present invention;
Figure 5 is a side view of two mutually facing devices; and
Figure 6 is a partially sectional plan view of a point for connection between two frames of cabinets.

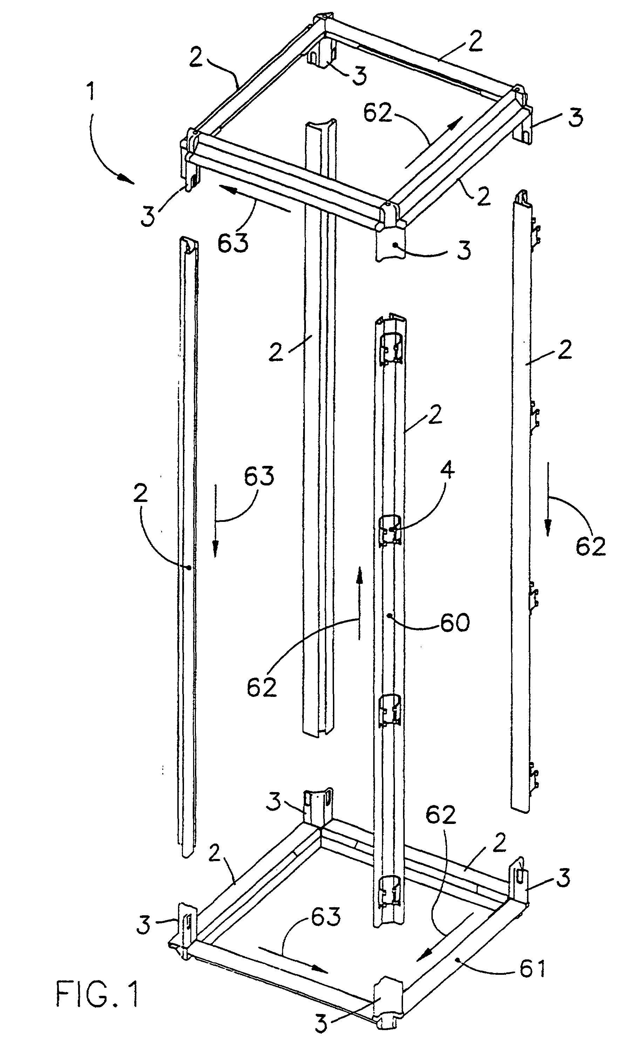

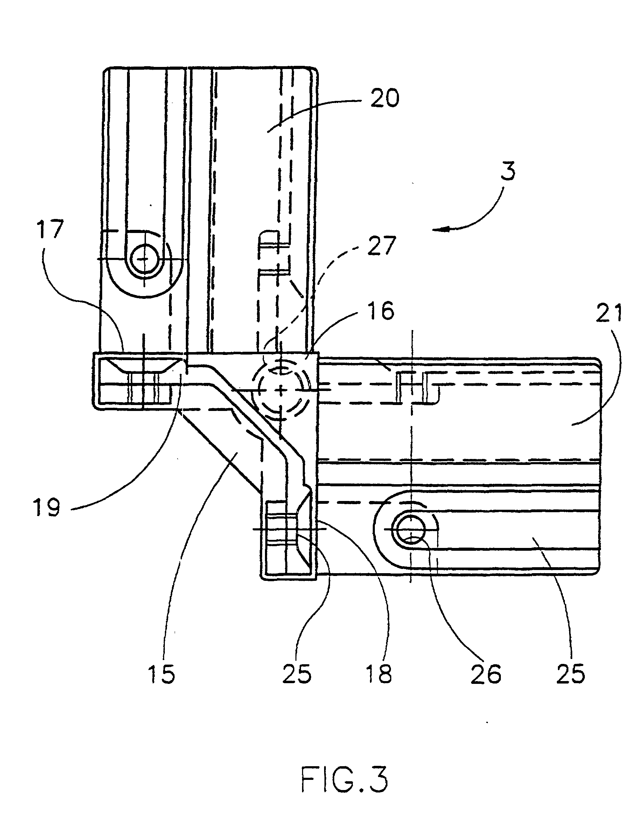

Figures 1, 2, 3 and 4 show the main components that constitute a frame for an electrical cabinet, generally designated by the reference numeral 1.

The frame 1 is constituted by twelve profiled elements 2 having the same cross-section and mutually assembled by eight angle elements 3.

Connecting and supporting devices 4, described in greater detail hereinafter, are fixed to the profiled elements 2.

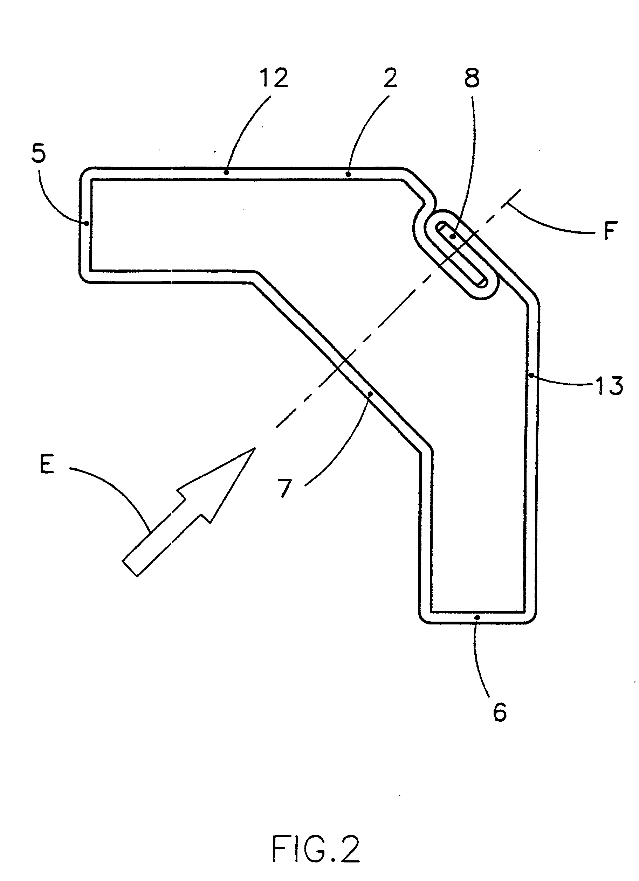

Figure 2 shows the plan view of a first embodiment of the profiled element 2.

The profile 2 is provided as a hollow box-like element in which two arms 5 and 6 are provided.

The two arms 5 and 6 are preferably perpendicular to each other. The profile is assembled so as to leave the concave part (in the direction of the arrow E) towards the outside of the cabinet.

The profile includes an oblique surface 7 for connecting the arms 5 and 6.

The profile is closed on the side lying opposite to the inclined surface 7 by means of a seam 8.

Advantageously, the profile 2 is symmetrical with respect to a line (F) which is perpendicular to the surface 7.

Preferably, the surface 7 is inclined at 45° with respect to the arms 5 and 6.

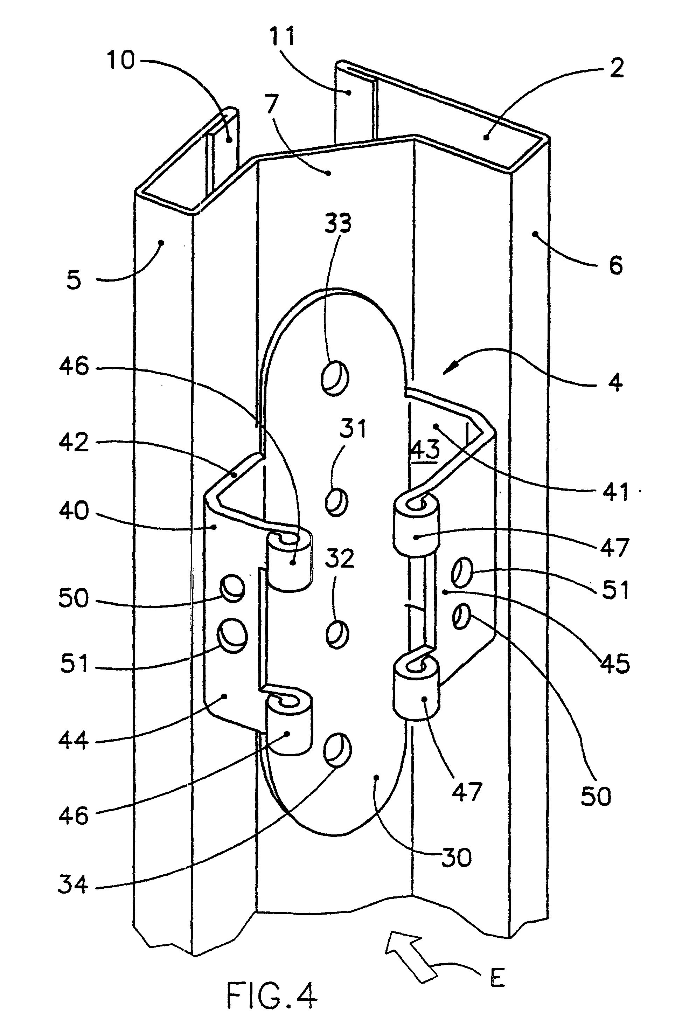

In a different embodiment, the profiled element 2 has an open cross-section (Figure 4).

In this case, the profile has arms 5 and 6 in which the ends 10 and 11 of the outer sides are folded.

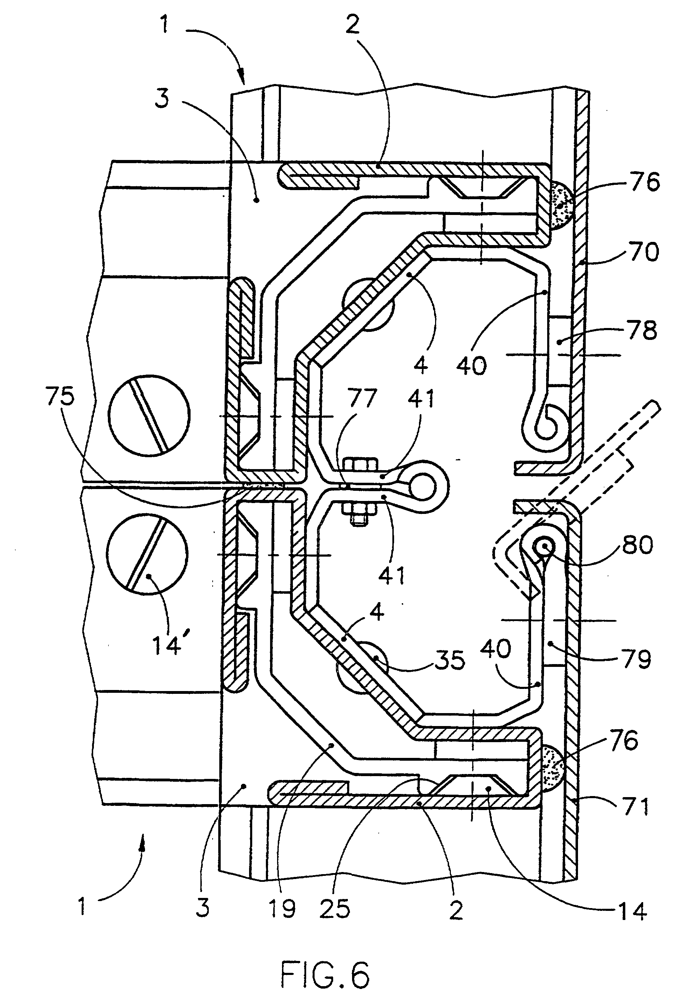

The profiled elements 2 have, on the outer sides 12 and 13 of the arms 5 and 6, holes (not shown) having different diameters and shapes. The holes are provided at preset intervals. Some of the holes have seats 14 for fixing devices which extend towards the inside of the profile (Figure 6). The seats 14 accommodate, either fully or so as to conceal them, the heads 14' of fixing devices such as screws or bolts.

The profiled elements 2 are assembled, forming the edges of the frame 1. Angle elements 3 mutually connect the ends of the profiled elements 2.

The angle elements or three-way angle elements 3 have a body 15 forming the apex of the corner of the frame 1. The body 15 has three mutually perpendicular surfaces 16, 17 and 18 wherefrom three arms 19, 20 and 21 protrude.

The arms 19, 20 and 21 of the angle element 3 have a cross-section which can be geometrically mated to the inner surface of the profiled elements 2.

The arms 19, 20 and 21 of the angle element 3 have longitudinal slots 25 to allow the insertion of the abutment seats 14 for the devices 14' for fixing the profiled elements 2.

Proximate to the body 15 of the angle element 3 and on the bottom of the slots 25 threaded holes 26 are provided which accommodate the devices 14' for fixing the profiled elements 2.

The body 15 of the angle element 3 has, on the outer side, a threaded hole 27 in order to accommodate a hoisting eyebolt and a floor resting foot (both of which are not shown).

Figure 4 shows a connecting and supporting device which is generally designated by the reference numeral 4 and is accommodated in the concave part of the profiled element 2.

A base plate 30 or base is fixed to the inclined surface 7. The inclined surface 7 has transverse holes for centering and fixing (not shown). Centering studs 31, 32 are provided in the base 30. The studs 31, 32 are inserted in suitable transverse holes provided in the inclined surface 7.

Two through holes 33 and 34 are provided at the end of the base 30. The holes 33, 34 of the base 30 are aligned with holes provided on the profiled element 2.

The holes 33, 34 accommodate means for fixing the base 30 to the inclined surface 7. For example, the base 30 is fixed to the inclined surface 7 by means of rivets 35 (Figure 6).

Wings 40, 41 protrude at different vertical elevations of the longitudinal sides of the base 30.

The wings 40, 41 have a first portion 42, 43 which adheres to the surface of the arms 5, 6 and a second end portion 44, 45 which is perpendicular to the arms 5 and 6.

Eye-shaped slots 46, 47 are provided at the end of the wings 40, 41.

A first plurality of slots 46 is provided in an offset position with respect to the second plurality of slots 47 provided on the second wing 41.

Preferably, the first wing 40 is offset with respect to the second wing 41 by an elevation which is equal to the height of the eyes.

In an advantageous embodiment of the invention, the plurality of slots 46, 47 are longitudinally offset and mutually opposite, with respect to the centerline of the connecting and supporting device 4, by half the height of the eyes that constitute the slots 46, 47.

The wings 40, 41 are offset so that they can be mated to a second facing device.

The connecting and supporting device 4 is advantageously composed of a single folded metal sheet.

Preferably, in one wing 40 the portion 44 that is perpendicular to the arm 5 of the profiled element 2 is larger than the portion 45 of the second wing 41. The extra area constitutes a connecting and supporting surface large enough to accommodate, for example, a wing or leaf of a hinge which is fixed to a door (all of which are not shown). In this case, the connecting and supporting devices 4 can be mutually mated when they are arranged so as to face each other and are mutually reversed.

In an alternative embodiment, the portion 43 of the wing 41 that is contiguous to the base 30 is longer than the arm 6 of the profiled element 2. In this manner, the end portion 45 of the wing 41 protrudes laterally from the space occupied by the profiled element 2 and facilitates the insertion of a gasket 76 between the profiled element 2 and the cladding panel or a second frame which is connected to the wing 41 of the connecting and supporting device 4 (Figure 6).

The end portion 44, 45 of the wings 40, 41 has transverse through holes 50, 51.

The holes 50, 51 are longitudinally aligned.

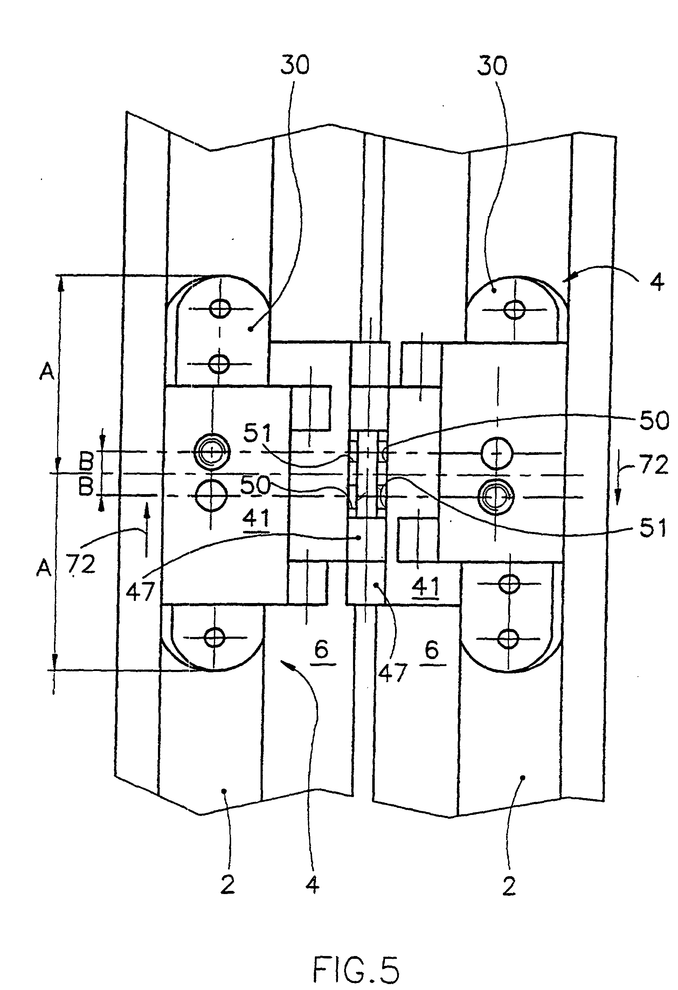

The holes 50, 51 are mutually opposite with respect to the centerline (indicated by the distance A of Figure 5) of the connecting and supporting device 4 and are equidistant therefrom (B).

A hole 50 is provided with a thread. The hole 51 has a diameter which is larger than the thread of the first hole 50.

The profiled element 2 on which the connecting and supporting devices 4 are fixed constitutes a module for the assembly of cabinet frames 1.

The frame 1 is assembled by using segments of profiled elements 2 which are mutually connected, at their ends, through the angle elements 3, constituting the uprights 60 and the cross-members 61 (Figure 1).

The uprights 60 and the cross-members 61 arranged on the same plane as the frame 1 are assembled by orientating the profiled elements 2 so that the device 4 rotates as one moves from one side to the other clockwise (in the direction of the arrows 62) or counterclockwise (in the direction of the arrows 63).

The connecting and supporting device 4 provided on the frame 1 allows to connect the cladding panels and to support the doors in the manner described in greater detail hereinafter.

Figures 5 and 6 show how two connecting and supporting devices 4 are mutually connected and how a cladding panel 70 and a door 71 are mounted on a frame 1.

Figure 5 shows two connecting and supporting devices 4 facing each other. The bases 30 are mutually aligned. The devices 4 face each other and are mutually reversed (in the direction of the arrow 72).

In this manner, the wing 41 of the two devices 4 is contiguous and offset, allowing the slots 47 to mutually overlap and be mutually aligned longitudinally. The hole 50 provided with the thread is also aligned with the larger-diameter hole 51 of the second device.

If the connecting and supporting devices 4 have wings 40 and 41 having the same dimensions, it is possible to mate two devices 4 regardless of how they face each other, i.e., both reversed and with the same orientation.

It is thus possible to mutually connect the two connecting and supporting devices 4 so that they can oscillate by means of a pivot inserted in the slots 46, 47 or by means of a fixed connection provided by fixing devices which are inserted in the holes 50, 51 of the contiguous wings 41 of the two devices 4.

Figure 6 shows how two connecting and supporting devices 4 connect two contiguous frames 1 through a wing 41 and support, by means of the second wing 40, a cladding panel 70 and a door 71.

In order to be able to interpose gaskets 75, 76 between the frames 1 and between the frame and the cladding panel 70, spacer blocks 77, 78 are provided which have transverse through holes facing the wings 40, 41 proximate to the connecting holes 50 and 51. In order to support the door 71, a hinge wing 79 is fixed inside the door 71 and is connected by means of a pivot 80 to the slot 46 of the wing 40 of the connecting and supporting device 4.

The materials employed, as well as the contingent shapes and the dimensions, may of course be any according to requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A frame (1) with a connecting and supporting device (4) for profiled elements (2) and panels (70, 71) of cabinets, provided with means (31, 32, 33, 34) for mutual positioning and fixing, the profiled element (2) that constitutes the frame (1) having a connecting surface (7) between two arms (5, 6) divaricating towards the outside (E), the connecting and supporting device (4) comprising a base plate (30) suitable to be accomodated on said connecting surface (7), and wings (40, 41) which protrude form the sides of said base plate (30) and have, at their free ends, a plurality of connecting slots (46, 47), the plurality of slots (46) of one wing (40) being provided in an offset position with respect to the plurality of slots (47) of the other wing (41), **characterized in that** the connecting and supporting device (4) is composed of a single folded sheet of metal and **in that**, when the base plate (30) is accomodated on the connecting surface (7) the wings (40, 41) rest on the sides of the arms (5, 6).

2. A frame (1) according to claim 1, **characterized in that** the plurality of slots (46, 47) is longitudinally offset with respect to the centerline of the connecting and supporting device (4) by half of the height of the eye that constitutes the slot (46, 47).

3. A frame (1) according to claim 1, **characterized in that** the end part (44, 45) of the wings (40, 41) is folded at right angles to the arms (5, 6) of the profiled element (2).

4. A frame (1) according to claim 1, **characterized in that** the wings (40, 41) are longer than the arms (5, 6) of the profiled element.

5. A frame (1) according to claim 1, **characterized in that** the end part (44, 45) of the wings (40, 41) has transverse through holes (50, 51) which are mutually aligned longitudinally.

6. A frame (1) according to claim 5, **characterized in that** the holes (50, 51) provided in the end part (44, 45) of the wings (40, 41) are mutually opposite and equally spaced (B) from the centerline of the connecting and supporting device (4) and **in that** a first hole (50) has an internal thread and a second hole (51) is given a larger diameter than the first hole (50).

7. A frame (1) according to claim 1, **characterized in that** the arms (5, 6) of the profiled element (2) are mutually perpendicular.

8. A frame (1) according to claim 1, **characterized in that** the outer sides (12, 13) of the arms (5, 6) of the profiled element (2) are joined by a seam (8), constituting a closed profile.

9. A frame (1) according to claim 1, **characterized in that** in the profiled element (2), the surface (7) for fixing the connecting and supporting device (4) is inclined at 45°with respect to the arms (5, 6).

10. A frame (1) according to claim 1, **characterized in that** the profiled elements (2) are mutually connected by means of an angle element (3), **in that** the body (15) of the angle element (3) has abutment surfaces (16, 17, 18) for the profiled elements (2) from which mutually perpendicular arms (19, 20, 21) protrude, and **in that** the cross-section of the arms (19, 20, 21) of the angle element (3) can be mated geometrically to the inside walls of the profiled element (2).

## Patentansprüche

1. Rahmen (1) mit einer Verbindungs- und Haltevorrichtung (4) für Profilelemente (2) und Paneele (70, 71) von Schränken, mit Mitteln (31, 32, 33, 34) zum gegenseitigen Positionieren und Befestigen, wobei das den Rahmen (1) bildende Profilelement (2) eine Verbindungsfläche (7) zwischen zwei jeweils nach außen (E) voneinander weg zeigenden Armen (5, 6) hat und die Verbindungs- und Haltevorrichtung (4) eine Grundplatte (30), die geeignet ist, an der Verbindungsfläche (7) aufgenommen zu werden, und Flügel (40, 41) hat, die von den Seiten der Grundplatte (30) abstehen und an ihren freien Enden jeweils mehrere Verbindungsöffnungen (46, 47) haben, wobei die mehreren Öffnungen (46) eines Flügels (40) versetzt zu den mehreren Öffnungen (47) des anderen Flügels (41) angeordnet sind, **dadurch gekennzeichnet, daß** die Verbindungs- und Haltevorrichtung (4) aus einer einzigen gebogenen Metallplatte besteht, und daß die Flügel (40, 41) an den Seiten der Arme (5, 6) anliegen, wenn die Grundplatte (30) an der Verbindungsfläche (7) angeordnet ist.

2. Rahmen (1) nach Anspruch 1, **dadurch gekennzeichnet, daß** die mehreren Öffnungen (46, 47) in Längsrichtung bezüglich der Mitte des Verbindungs- und Halteelements (4) um die halbe Höhe der die Öffnung (46, 47) bildenden Öse versetzt sind.

3. Rahmen (1) nach Anspruch 1, **dadurch gekennzeichnet, daß** die Endabschnitte (44, 45) der Flügel (40, 41) jeweils rechtwinklig zu den Armen (5, 6) des Profilelements (2) gebogen sind.

4. Rahmen (1) nach Anspruch 1, **dadurch gekennzeichnet, daß** die Flügel (40, 41) länger sind als die Arme (5, 6) des Profilelements.

5. Rahmen (1) nach Anspruch 1, **dadurch gekennzeichnet, daß** die Endabschnitte (44, 45) der Flügel (40, 41) jeweils quer verlaufenden Durchgangslöcher (50, 51) haben, die in Längsrichtung zueinander ausgerichtet sind.

6. Rahmen (1) nach Anspruch 5, **dadurch gekennzeichnet, daß** die Löcher (50, 51) in den Endabschnitten (44, 45) der Flügel (40, 41) einander gegenüberliegen und den gleichen Abstand (B) zur Mitte des Verbindungs- und Halteelements (4) haben, und daß ein erstes Loch (50) ein Innengewinde und ein zweites Loch (51) einen größeren Durchmesser als das erste Loch (50) hat.

7. Rahmen (1) nach Anspruch 1, **dadurch gekennzeichnet, daß** die Arme (5, 6) des Profilelements (2) senkrecht zueinander sind.

8. Rahmen (1) nach Anspruch 1, **dadurch gekennzeichnet, daß** die Außenseiten (12, 13) der Arme (5, 6) des Profilelements (2) durch einen Falz (8) zusammengefügt sind und ein geschlossenes Profil bilden.

9. Rahmen (1) nach Anspruch 1, **dadurch gekennzeichnet, daß** bei dem Profilelement (2) die Fläche (7) zum Anbringen des Verbindungs- und Halteelements (4) um 45° zu den Armen (5, 6) geneigt ist.

10. Rahmen (1) nach Anspruch 1, **dadurch gekennzeichnet, daß** die Profilelemente (2) mittels eines Winkelelements (3) miteinander verbunden sind, daß der Körper (15) des Winkelelements (3) Anschlagflächen (16, 17, 18) für die Profilelemente (2) hat, von denen zueinander senkrechte Arme (19, 20, 21) abstehen, und daß der Querschnitt der Arme (19, 20, 21) des Winkelelements (3) geometrisch mit den Innenwänden des Profilelements (2) zusammengebracht werden kann.

## Revendications

1. Bâti (1) avec un dispositif d'accrochage et de support (4) pour des éléments (2) et des panneaux (70, 71) profilés d'armoires, comportant des moyens (31, 32, 33, 34) de mise en place et de fixation mutuelles, l'élément profilé (2) qui constitue le bâti (1) ayant une surface d'accrochage (7) entre deux bras (5, 6) s'écartant vers l'extérieur (E), le dispositif d'accrochage et de support (4) comportant une plaque de base (30) pouvant être reçue sur ladite surface d'accrochage (7), et des ailes (40, 41) qui dépassent des côtés de ladite plaque de base (30) et comportent, à leurs extrémités libres une pluralité d'encoches d'accrochage (46, 47), la pluralité d'encoches (46) d'une première aile (40) étant disposées dans une position décalée par rapport à la pluralité d'encoches (47) de l'autre aile (41), **caractérisé en ce que** le dispositif d'accrochage et de support (4) est constitué par une seule tôle métallique pliée et **en ce que**, lorsque la plaque de base (30) est reçue sur la surface d'accrochage (7), les ailes (40, 41) reposent sur les côtés des bras (5, 6).

2. Bâti (1) selon la revendication 1, **caractérisé en ce que** la pluralité d'encoches (46, 47) sont décalées dans la direction longitudinale par rapport à l'axe central du dispositif d'accrochage et de support (4) dans une mesure égale à la moitié de la hauteur de l'oeil qui constitue l'encoche (46, 47).

3. Bâti (1) selon la revendication 1, **caractérisé en ce que** la partie formant extrémité (44, 45) des ailes (40, 41) est pliée perpendiculairement aux bras (5, 6) de l'élément profilé (2).

4. Bâti (1) selon la revendication 1, **caractérisé en ce que** les ailes (40, 41) sont plus longues que les bras (5, 6) de l'élément profilé (2).

5. Bâti (1) selon la revendication 1, **caractérisé en ce que** la partie formant extrémité (44, 45) des ailes (40, 41) comporte des trous traversants transversaux (50, 51) alignés mutuellement dans la direction longitudinale.

6. Bâti (1) selon la revendication 5, **caractérisé en ce que** les trous (50, 51) présents dans la partie formant extrémité (44, 45) des ailes (40, 41) sont mutuellement opposés et à équidistance (B) par rapport à l'axe central du dispositif d'accrochage et de support (4) et **en ce qu'**un premier trou (50) comporte un filetage intérieur et un second trou (51) est doté d'un diamètre plus grand que celui du premier trou (50).

7. Bâti (1) selon la revendication 1, **caractérisé en ce que** les bras (5, 6) de l'élément profilé (2) sont mutuellement perpendiculaires.

8. Bâti (1) selon la revendication 1, **caractérisé en ce que** les côtés extérieurs (12, 13) des bras (5, 6) de l'élément profilé (2) sont réunis par un sertissage (8), en constituant un élément profilé fermé.

9. Bâti (1) selon la revendication 1, **caractérisé en ce que**, dans l'élément profilé (2), la surface (7) pour la fixation du dispositif d'accrochage et de support (4) est inclinée à 45° par rapport aux bras (5, 6).

10. Bâti (1) selon la revendication 1, **caractérisé en ce que** les éléments profilés (2) sont mutuellement accrochés à l'aide d'un élément d'angle (3), **en ce que** le corps (15) de l'élément d'angle (3) comporte pour les éléments profilés (2) des surfaces de butée (16, 17, 18) depuis lesquelles font saillie des bras mutuellement perpendiculaires (19, 20, 21) et **en ce que** la section transversale des bras (19, 20, 21) de l'élément d'angle (3) peut être adaptée géométriquement aux parois intérieures de l'élément profilé (2).
